# EUROPÄISCHE PATENTANMELDUNG

(11) **EP 0 673 697 A1**
(43) Veröffentlichungstag der Anmeldung: **27.09.1995**
(21) Anmeldenummer: 95102237.5
(22) Anmeldetag: 18.02.1995
(51) Int. Cl.: B21D 26/02, B29C 55/24, F16L 9/14

(54) **Verfahren und Vorrichtung zur Herstellung von Verbundrohren**

(30) Priorität: 02.03.1994 DE 4406726
(71) Anmelder: BDAG Balcke-Dürr Aktiengesellschaft, D-40882 Ratingen (DE)
(72) Erfinder: Podhorsky, Miroslav, Dr., D-40882 Ratingen (DE); Schmitt, Klaus-Dieter, D-45326 Essen (DE)
(74) Vertreter: Stenger, Watzke & Ring Patentanwälte

(57) **Zusammenfassung**

Die Erfindung betrifft ein Verfahren und eine Vorrichtung zur Herstellung von Verbundrohren aus einem Innenrohr (1) und einem Außenrohr (2), die aus unterschiedlichen Werkstoffen bestehen. Nach dem Ineinanderschieben der Rohre (1) und (2) wird durch gesteuertes Aufbringen von Druck auf die Innenfläche des Innenrohres (1) zuerst das Innenrohr (1) über den elastischen Bereich hinaus plastisch bis zur Anlage am Außenrohr (2) aufgeweitet. Anschließend wird durch Erhöhen des Druckes unter weiterer plastischer Verformung des Innenrohres (1) das Außenrohr (2) im elastischen Bereich derart aufgeweitet, daß nach der Druckentlastung ein Haftdruck zwischen Innenrohr (1) und Außenrohr (2) verbleibt, der der verhinderten Rückverformung aus der Differenz der elastischen Rückverformungen der beiden Rohre (1) und (2) in tangentialer Richtung entspricht.

## Beschreibung

Die Erfindung betrifft ein Verfahren und eine Vorrichtung zur Herstellung von insbesondere für die Energie- und Umwelttechnik bestimmten Verbundrohren aus einem Innenrohr und einem Außenrohr, die aus unterschiedlichen Werkstoffen bestehen und nach dem Ineinanderschieben durch plastisches Verformen des Innenrohres über ihre gesamte Länge spaltfrei und kraftschlüssig miteinander verbunden werden.

Aus Innen- und Außenrohr aus unterschiedlichen Werkstoffen bestehende Verbundrohre sind bekannt. Sie werden im chemischen Apparatebau und in der Energie- und Umwelttechnik eingesetzt, wenn die jeweils verwendeten Werkstoffe besondere Anforderungen erfüllen müssen. Beispielsweise bei Wärmeübertragern muß der jeweils gewählte Werkstoff den Betriebsbelastungen durch Temperatur, Druck, Abrasion und Korrosion über die gesamte Lebensdauer standhalten. Da bei derartigen Wärmeübertragern die Betriebsbelastungen durch Druck, Abrasion und Korrosion auf der Innen- und Außenseite unterschiedlich sein können, bieten die bekannten Verbundrohre den Vorteil, daß die Werkstoffwahl von Innen- und Außenrohr der jeweiligen Betriebsbelastung entsprechend getroffen werden kann, so daß sich im Verhältnis zu einem hochwertigen Einzelrohr durch die Verwendung eines Verbundrohres ein günstigeres Preis-Leistungs-Verhältnis erzielen läßt.

Die bekannten, aus Innenrohr und Außenrohr bestehenden Verbundrohre werden dadurch hergestellt, daß die beiden ineinandergeschobenen Rohre über einen Dorn gezogen werden, um durch plastisches Verformen des Innenrohres eine spaltfreie und kraftschlüssige Verbindung über die gesamte Rohrlänge zu erzielen. Dieses bekannte Herstellungsverfahren ist jedoch aufwendig und teuer und erfordert einen hohen Energieeinsatz.

Der Erfindung liegt die **Aufgabe** zugrunde, ein Verfahren und eine Vorrichtung zur Herstellung von Verbundrohren zu schaffen, mit denen auf besonders einfache, preisgünstige und energiesparende Weise eine zuverlässige und qualitativ hochwertige Verbindung der beiden Einzelrohre zum Verbundrohr erzielt wird.

Das erfindungsgemäße Verfahren zur **Lösung** dieser Aufgabenstellung ist dadurch gekennzeichnet, daß durch gesteuertes Aufbringen von Druck, vorzugsweise einer Flüssigkeit, auf die Innenfläche des Innenrohres zuerst das Innenrohr über den elastischen Bereich hinaus plastisch bis zur Anlage des Innenrohres am Außenrohr aufgeweitet wird und daß anschließend durch Erhöhen des Druckes unter weiterer plastischer Verformung des Innenrohres das Außenrohr im elastischen Bereich derart aufgeweitet wird, daß nach der Druckentlastung ein Haftdruck zwischen Innenrohr und Außenrohr verbleibt, der der verhinderten Rückverformung aus der Differenz der elastischen Rückverformungen der beiden Rohre in tangentialer Richtung entspricht.

Durch das hydraulische Aufweiten des Innenrohres bis in den plastischen Bereich und das durch eine weitere Druckerhöhung elastische Aufweiten des Außenrohres infolge der plastischen Verformung des Innenrohres ergibt sich nicht nur eine spaltfreie Anlage des Innenrohres über seine gesamte Länge am Außenrohr, sondern nach der Druckentlastung ein bleibender Haftdruck zwischen Innenrohr und Außenrohr, der aus einer verhinderten Rückverformung resultiert, die sich aus der Differenz der elastischen Rückverformungen der beiden Rohre in tangentialer Richtung ergibt. Dieser sich nach der Druckentlastung selbsttätig einstellende Haftdruck verteilt sich gleichmäßig, und zwar jeweils zur Hälfte auf das Innen- und Außenrohr und ist abhängig von dem Verhältnis der Elastizitätsmodule der für die beiden Rohre verwendeten Werkstoffe.

Um diesen, nach der Druckentlastung verbleibenden Haftdruck zwischen den Rohren zu erhöhen, kann gemäß einem weiteren Merkmal der Erfindung eine

Temperaturdifferenz durch Aufwärmen des Außenrohres und/oder Abkühlen des Innenrohres vor dem hydraulischen Aufweiten aufgebracht werden. Der sich nach der Druckentlastung und einem Temperaturausgleich einstellende Haftdruck entspricht wiederum der verhinderten Rückverformung, die sich in diesem Fall aus der Differenz der elastischen Rückverformung der beiden Rohre in tangentialer Richtung und aus der temperaturbedingten verhinderten Rückverformung zusammensetzt.

Gemäß einem weiteren Merkmal der Erfindung kann zum Ausgleich geometrischer Unebenheiten zwischen Innenrohr und Außenrohr eine Zwischenschicht aus leicht verformbarem Material eingebracht werden. Für diese Zwischenschicht wird ein gut wärmeleitfähiges Material, wie Graphitpulver, Aluminiumfolie oder Messingfolie verwendet, um einen guten Wärmeübergang zwischen Innenrohr und Außenrohr sicherzustellen.

Die erfindungsgemäße Vorrichtung ist gekennzeichnet durch zwei gegeneinander gerichtete, die ineinandergeschobenen Rohre zwischen sich dichtend aufnehmende Spanndorne, von denen der eine Spanndorn ortsfest angeordnet und mit einer Durchgangsbohrung versehen ist, die mit dem Hochdruckraum eines auf der Niederdruckseite mit Druckmittel beaufschlagten Druckerzeugers, insbesondere eines Stufenkolbens verbunden ist, wogegen der andere Spanndorn an der Kolbenstange eines Nachlaufkolbens angeordnet und mit einer mit einem Rückschlagventil ausgestatteten Bohrung versehen ist, die mit der Druckseite des mit Druckmittel beaufschlagbaren Nachlaufkolbens verbunden ist.

Die erfindungsgemaße Vorrichtung gestattet auf sehr wirtschaftliche Weise die Herstellung qualitativ hochwertiger Verbundrohre. Aufgrund ihrer einfachen Konstruktion ist die Vorrichtung preisgünstig herstellbar und funktionssicher. Ihr Betrieb erfordert nur einen geringen Energieaufwand, so daß Verbundrohre aus unterschiedlichsten Materialien energiesparend und kostengünstig hergestellt werden können.

Auf der Zeichnung sind ein Ausführungsbeispiel einer erfindungsgemäßen Vorrichtung, eine Darstellung des Entstehens eines Verbundrohres und zwei Diagramme dargestellt, und zwar zeigen:
- Fig. 1: eine schematische Darstellung einer Vorrichtung,
- Fig. 2: den Ausgangszustand, den Aufweitzustand und den Endzustand bei der Herstellung eines Verbundrohres, und zwar jeweils anhand eines Längsschnittes durch eine Hälfte eines Innen- und Außenrohres,
- Fig. 3: ein Druck-Weg-Diagramm für das hydraulische Aufweiten und
- Fig. 4: ein dem Diagramm gemäß Fig. 3 entsprechendes Diagramm, bei dem dem hydraulischen Aufweiten eine Temperaturdifferenz überlagert ist.

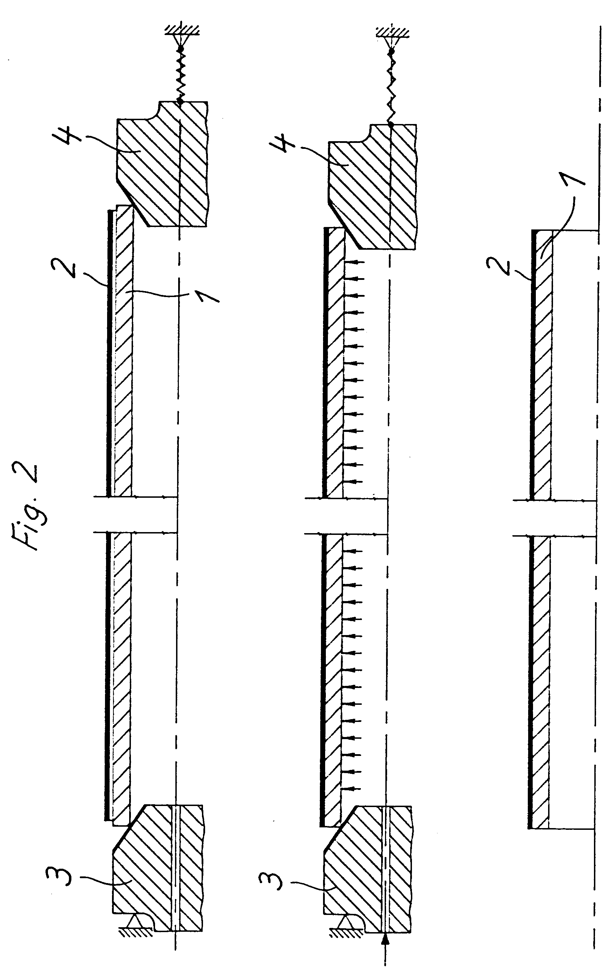

Die Fig. 2 zeigt im unteren Teil ein aus einem Innenrohr 1 und einem Außenrohr 2 bestehendes Verbundrohr. Innenrohr 1 und Außenrohr 2 sind über ihre gesamte Länge spaltfrei und kraftschlüssig miteinander verbunden. Sie bestehen aus unterschiedlichen Werkstoffen, die im Hinblick auf die Betriebsbelastungen der Außen- bzw. Innenseite des Verbundrohres durch Temperatur, Druck, Abrasion und Korrosion gewählt worden sind.

Im Ausgangszustand gemäß der oberen Darstellung in Fig. 2 sind Innenrohr 1 und Außenrohr 2 ineinandergeschoben, bilden zwischen sich jedoch einen Ringspalt. Im Hinblick auf die spätere Aufweitung des Innenrohres 1 und die damit verbundene Verkürzung des Innenrohres 1 ist das Innenrohr im Ausgangszustand geringfügig länger als das Außenrohr 2. Diese Längendifferenz verschwindet, sobald das Innenrohr 1 gemäß der mittleren Darstellung in Fig. 2 hydraulisch aufgeweitet worden ist, wie die an der Innenfläche des Innenrohres 1 angreifenden Pfeile andeuten. Dieses hydraulische Aufweiten geschieht mit Hilfe zweier Spanndorne 3 und 4, die in den beiden oberen Darstellungen der Fig. 2 angedeutet sind.

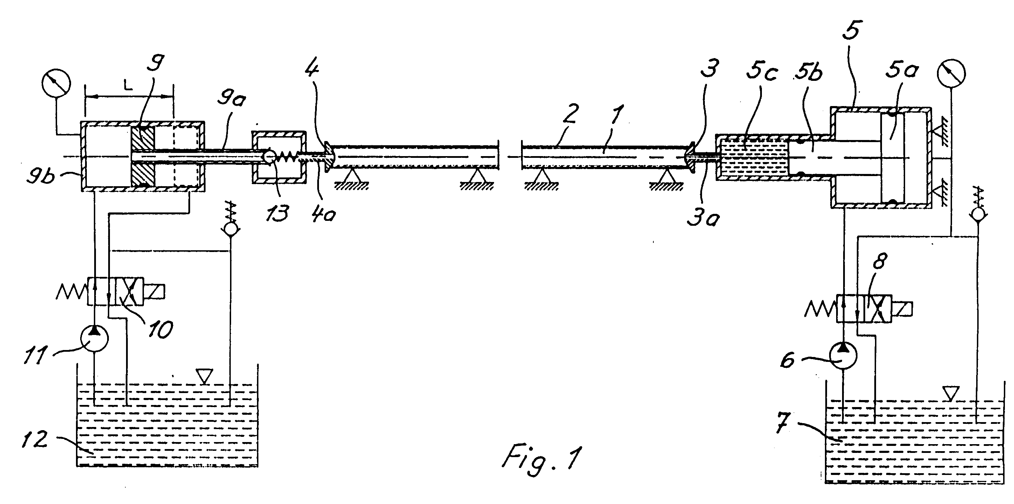

Wie die schematische Darstellung eines Ausführungsbeispiels einer Vorrichtung zur Herstellung von Verbundrohren in Fig. 1 zeigt, ist der Spanndorn 3 ortsfest angeordnet, und zwar an der Vorderseite eines Druckerzeugers 5, der beim Ausführungsbeispiel als Stufenkolben ausgeführt ist. Der im Durchmesser größere Niederdruckkolben 5a ist durch eine Pumpe 6 mit Druckmittel aus einem Druckmittelbehälter 7 beaufschlagbar, und zwar entsprechend der Stellung eines Schaltventils 8. Der Hochdruckkolben 5b ragt in einen Hochdruckraum 5c, der mit einer Durchgangsbohrung 3a des Spanndornes 3 in Verbindung steht.

Der an das andere Ende des aus Innenrohr 1 und Außenrohr 2 gebildeten Verbundrohres angesetzte Spanndorn 4 ist an der hohlen Kolbenstange 9a eines Nachlaufkolbens 9 angeordnet, der ebenfalls über ein Schaltventil 10 durch eine Pumpe 11 mit Druckmittel aus einem Druckmittelbehälter 12 beaufschlagbar ist. Dieser mit dem Nachlaufkolben 9 verschiebbare Spanndorn 4 besitzt eine Bohrung 4a, die durch ein Rückschlagventil 13 abschließbar ist, das als federbelastetes Kugelventil dargestellt ist.

Um die Innenfläche des gemäß der oberen Darstellung in Fig. 2 zwischen den Spanndornen 3 und 4 abgedichtet eingespannten Innenrohres 1 mit Druckmittel zu beaufschlagen, wird als erstes Druckmittel, vorzugsweise Wasser, mit Hilfe der Pumpe 11 aus dem Druckmittelbehälter 12 in den linken Druckraum des Zylindergehäuses 9b des Nachlaufkolbens 9 gepumpt, das durch die hohle Kolbenstange 9a und durch die Bohrung 4a des Spanndornes 4 in das Innenrohr 1 und in den Hochdruckraum 5c gelangt, sobald der von der Pumpe 11 erzeugte Druck den Schließdruck des Rückschlagventils 13 übersteigt. Der hierbei auf die Druckseite des Nachlaufkolbens 9 ausgeübte Druck sorgt dafür, daß der auf der Kolbenstange 9a angeordnete Spanndorn 4 das Innenrohr 1 an beiden Enden abdichtend an den ortsfesten Spanndorn 3 anpreßt.

Sobald das Innenrohr 1 vollständig mit Druckmittel aus dem Druckmittelbehälter 12 gefüllt ist, wird - unter Aufrechterhaltung des von der Pumpe 11 auf den Nachlaufkolben 9 ausgeübten Druckes - die Druckseite des Niederdruckkolbens 5a durch die Pumpe 6 mit Druckmittel aus dem Druckmittelbehälter 7 beaufschlagt. Zu diesem Zweck muß das in Fig. 1 eingezeichnete Schaltventil 8 von seiner dargestellten Stellung in die andere Endstellung umgesteuert werden. Der auf den Niederdruckkolben 5a ausgeübte Druck wird entsprechend dem Flächenverhältnis zwischen Niederdruckkolben 5a und Hochdruckkolben 5b erhöht, so daß im Hochdruckraum 5c des Druckerzeugers 5 ein erheblich höherer Druck ansteht, der sich durch die offene Durchgangsbohrung 3a im Spanndorn 3 über die gesamte Länge im Innenrohr 1 ausbreitet und den nachfolgend zu beschreibenden Aufweitvorgang bewirkt.

Während dieses hydraulischen Aufweitens verringert sich die Länge des Innenrohres 1, wie dies in Vergleich der oberen und mittleren Darstellung in Fig. 2 erkennen läßt. Um trotz dieser Schrumpfung der Länge des Innenrohres 1 die Abdichtung zwischen den Spanndornen 3 und 4 und dem Innenrohr 1 aufrechtzuerhalten, verfährt der Nachlaufkolben 9 um den Verfahrweg L, der im linken Teil der Fig. 1 eingezeichnet ist. Bei einer Rohrlänge bis zu 20 m und einem Rohrdurchmesser zwischen 10 und 30 mm kann dieser Verfahrweg bis zu 600 mm betragen. Während des Aufweitvorganges sorgt das Rückschlagventil 13 dafür, daß sich der im Inneren des Innenrohres 1 erzeugte Hochdruck nicht auf den Nachlaufkolben 9 überträgt.

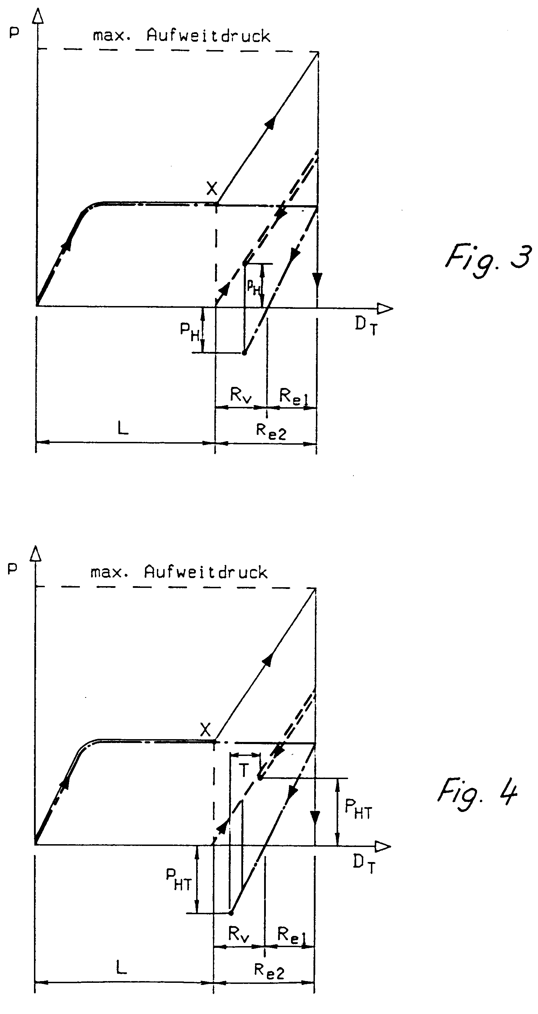

Das in Fig. 3 dargestellte Diagramm zeigt den Druck P über der Dehnung Dₜ in Umfangsrichtung des Innenrohres 1 bzw. Außenrohres 2 während des Aufweitvorganges. Der Druckverlauf ist mit ausgezogenen Linien dargestellt. Der höchste Wert des Aufweitdruckes ist dadurch begrenzt, daß Rohre mit verhältnismäßig dünner Wandstärke und großer Rohrlänge aufgeweitet werden, ohne daß eine äußere Abstützung der Rohre gegen Aufblähen erfolgt. Mit strichpunktierten Linien ist die Dehnung des Innenrohres 1 in Umfangsrichtung dargestellt, mit gestrichelten Linien die entsprechende Dehnung des Außenrohres 2.

Wie aus der strichpunktierten Linie in Fig. 3 hervorgeht, dehnt sich das Innenrohr 1 während des Druckanstieges zuerst im elastischen Bereich. Bei gleichbleibendem Aufweitdruck erfolgt anschließend eine plastische Dehnung des Innenrohres 1 bis dieses am Punkt X spaltfrei am Außenrohr 2 anliegt. Durch eine nunmehr erfolgende Erhöhung des Aufweitdruckes P erfolgt eine weitere Aufweitung des Innenrohres 1 im plastischen Bereich, die erst bei Erreichen des maximalen Aufweitdruckes am rechten Ende des Diagramms beendet wird. Durch die Anlage des Innenrohres 1 am Außenrohr 2 erfolgt im Bereich dieser Druckerhöhung gleichzeitig eine elastische Aufweitung des Außenrohres 2, die in Fig. 3 mit gestrichelten Linien dargestellt ist und die ebenfalls bei Erreichen des maximalen Aufweitdruckes endet.

Bei der nunmehr erfolgenden Druckentlastung geht der Druck P auf Null zurück. Gleichzeitig findet eine elastische Rückverformung sowohl des Innenrohres 1 gemäß der strichpunktierten Linie und des Außenrohres 2 gemäß der gestrichelten Linie statt. Der theoretische Wert der elastische Rückverformung Rₑ₁ des Rohres 1 ist im Diagramm der Fig. 3 ebenso eingezeichnet wie der theoretische Wert der elastischen Rückverformung Rₑ₂ des Rohres 2. Diese theoretischen Werte würden erreicht, wenn die beiden Rohre sich unabhängig voneinander im elastischen Bereich rückverformen könnten. Da das Innenrohr 1 jedoch zuvor im plastischen Bereich aufgeweitet wurde und spaltfrei am lediglich im elastischen Bereich aufgeweiteten Außenrohr 2 anliegt, endet die elastische Rückverformung des Außenrohres 2 vor Erreichen des theoretischen Endpunktes, wogegen das Innenrohr 1 über den theoretischen Endpunkt hinaus stärker rückverformt wird, weil es zusätzlich durch das sich im elastischen Bereich rückverformende Außenrohr 2 belastet wird.

Das Diagramm in Fig. 3 zeigt, daß die Differenz der theoretischen elastischen Rückverformungen Rₑ₂ -Rₑ₁, die der in der Praxis verhinderten Rückverformung Rᵥ entspricht, einen Haftdruck Pₕ zur Folge hat, der sich hälftig auf das Innenrohr 1 bzw. auf das Außenrohr 2 verteilt. Dieser Haftdruck P_{H} führt zu einer kraftschlüssigen Verbindung der beiden spaltfrei ineinandergeschobenen Rohre über deren gesamte Länge.

Schließlich ist in Fig. 3 der Verfahrweg L zu erkennen, den der in Fig. 1 eingezeichnete Nachlaufkolben 9 zurücklegen muß, um der axialen Verkürzung des Innenrohres 1 bei der hydraulischen Aufweitung zu folgen.

Das in Fig. 4 dargestellte Diagramm entspricht dem Diagramm der Fig. 3, enthält jedoch insoweit eine Veränderung, als die Endpunkte der tatsächlichen elastischen Rückverformung der Rohre 1 und 2 durch die zuvor aufgebrachte Temperaturdifferenz T gegeneinander im Sinne einer Spreizung verschoben werden. Diese Temperaturdifferenz T ergibt sich aus der Temperatur des Außenrohres 2 multipliziert mit dessen Temperaturausdehnungskoeffizienten minus der Temperatur des Innenrohres 1 multipliziert mit dem Temperaturausdehnungskoeffizienten des Innenrohres 1.

Wie sich aus einem Vergleich des Diagrammes nach Fig. 4 mit dem Diagramm nach Fig. 3 ergibt, resultiert aus der vor dem Aufweitvorgang erzeugten Temperaturdifferenz ein gesteigerter Haftdruck P_{HT}, der sich wiederum wegen der gegenseitigen Beeinflussung hälftig auf das Innenrohr 1 und hälftig auf das Außenrohr 2 auswirkt.

### Bezugszeichenliste:

- Dₜ: tangentiale Dehnung
- L: Verfahrweg
- P: Druck
- P_{H}: Haftdruck
- P_{HT}: Haftdruck
- Rₑ₁: elastische Rückverformung
- Rₑ₂: elastische Rückverformung
- Rᵥ: verhinderte Rückverformung
- T: Temperaturdifferenz
- X: Anlagepunkt
- 1: Innenrohr
- 2: Außenrohr
- 3: Spanndorn
- 3a: Durchgangsbohrung
- 4: Spanndorn
- 4a: Bohrung
- 5: Druckerzeuger
- 5a: Niederdruckkolben
- 5b: Hochdruckkolben
- 5c: Hochdruckraum
- 6: Pumpe
- 7: Druckmittelbehälter
- 8: Schaltventil
- 9: Nachlaufkolben
- 9a: Kolbenstange
- 9b: Zylindergehäuse
- 10: Schaltventil
- 11: Pumpe
- 12: Druckmittelbehälter
- 13: Rückschlagventil

## Patentansprüche

1. Verfahren zur Herstellung von insbesondere für die Energie und Umwelttechnik bestimmten Verbundrohren aus einem Innenrohr und einem Außenrohr, die aus unterschiedlichen Werkstoffen bestehen und nach dem Ineinanderschieben durch plastisches Verformen des Innenrohres über ihre gesamte Länge spaltfrei und kraftschlüssig miteinander verbunden werden,
**dadurch gekennzeichnet,**
daß durch gesteuertes Aufbringen von Druck (P), vorzugsweise einer Flüssigkeit, auf die Innenfläche des Innenrohres (1) zuerst das Innenrohr (1) über den elastischen Bereich hinaus plastisch bis zur Anlage des Innenrohres (1) am Außenrohr (2) aufgeweitet wird und daß anschließend durch Erhöhen des Druckes unter weiterer plastischer Verformung des Innenrohres (1) das Außenrohr (2) im elastischen Bereich derart aufgeweitet wird, daß nach der Druckentlastung ein Haftdruck (P_{H}) zwischen Innenrohr (1) und Außenrohr (2) verbleibt, der der verhinderten Rückverformung (Rᵥ) aus der Differenz der elastischen Rückverformungen (Rₑ₂ -Rₑ₁) der beiden Rohre (1) und (2) in tangentialer Richtung entspricht.

2. Verfahren nach Anspruch 1, dadurch gekennzeichnet, daß der nach der Druckentlastung verbleibende Haftdruck (P_{HT}) zwischen den Rohren (1,2) durch Aufbringen einer Temperaturdifferenz (T) durch Aufwärmen des Außenrohres (2) und/oder Abkühlen des Innenrohres (1) vor dem hydraulischen Aufweiten erhöht wird.

3. Verfahren nach Anspruch 1 oder 2, dadurch gekennzeichnet, daß zum Ausgleich geometrischer Unebenheiten zwischen Innenrohr (1) und Außenrohr (2) eine Zwischenschicht aus leicht verformbarem Material eingebracht wird.

4. Vorrichtung zur Durchführung des Verfahrens nach mindestens einem der Ansprüche 1 bis 3, **gekennzeichnet durch** zwei gegeneinander gerichtete, die ineinandergeschobenen Rohre (1,2) zwischen sich dichtend aufnehmende Spanndorne (3,4), von denen der eine Spanndorn (3) ortsfest angeordnet und mit einer Durchgangsbohrung (3a) versehen ist, die mit dem Hochdruckraum (5c) eines auf der Niederdruckseite mit Druckmittel beaufschlagten Druckerzeugers (5), insbesondere eines Stufenkolbens verbunden ist, wogegen der andere Spanndorn (4) an der Kolbenstange (9a) eines Nachlaufkolbens (9) angeordnet und mit einer mit einem Rückschlagventil (13) ausgestatteten Bohrung (4a) versehen ist, die mit der Druckseite des mit Druckmittel beaufschlagbaren Nachlaufkolbens (9) verbunden ist.
